# EUROPÄISCHE PATENTSCHRIFT

(11) **EP 0 623 643 B1**
(45) Veröffentlichungstag und Bekanntmachung des Hinweises auf die Patenterteilung: **09.12.1998**
(21) Anmeldenummer: 94106127.7
(22) Anmeldetag: 20.04.1994
(51) Int. Cl.: C08G 79/00, C04B 35/58

(54) **Polymere multinäre Azane, Verfahren zu deren Herstellung und deren Verwendung**
Polymeric multinary azanes, process for their preparation and their use
Azanes multinaires polymériques, procédé pour les préparer et leur utilisation

(30) Priorität: 03.05.1993 DE 4314497
(43) Veröffentlichungstag der Anmeldung: 09.11.1994
(73) Patentinhaber: BAYER AG, 51368 Leverkusen (DE)
(72) Erfinder: Perchenek, Nils, Dr., D-51373 Leverkusen (DE); Baldus, Hans-Peter, Dr., D-51399 Burscheid (DE); Löffelholz, Josua, Dipl.-Chem., D-53225 Bonn (DE); Jansen, Martin, Prof., Dr., D-53127 Bonn (DE)

(56) Entgegenhaltungen:
- EP-A- 0 417 526
- EP-A- 0 601 405
- US-A- 4 886 860
- US-A- 4 946 809
- US-A- 5 198 152
- Journal of the American Ceramic Society, Bd 71, Nr.1 (1988) , Seiten 78-82.

## Beschreibung

Die vorliegende Erfindung betrifft polymere multinäre Azane, welche aus Baueinheiten der allgemeinen Formel [E(NR¹R²)ₐ(NR³)_{b/2}] aufgebaut sind, worin E=B, Al, Ga, In, Si, Ge, Ti, Zr, Hf, V, Nb, Ta, Cr, Mo, W und R¹, R², R³=H, C₁-C₆-Alkyl, Vinyl, Phenyl sein können, Verfahren zur Herstellung dieser Polymeren sowie deren Verwendung als Vorläuferverbindungen für keramische Hochleistungswerkstoffe.

Im Bereich der oxidischen Systeme hat der Sol-Gel-Prozeß herausragende Bedeutung erlangt für die Herstellung von Precursoren für Gläser und keramische Materialien. Er ermöglicht eine Kontrolle der Teilchengröße und -morphologie, die erhaltenen Produkte zeichnen sich durch homogene Elementverteilung, hohe Reinheit und gleichmäßige Partikelgröße aus. Es erscheint wünschenswert, diesen Prozeß auch für die Synthese nitridischer bzw. carbonitridischer Systeme einzusetzen, die seit einiger Zeit zunehmend für den Einsatz als keramische Hochleistungswerkstoffe untersucht werden.

Bislang sind die Möglichkeiten, durch ein dem Sol-Gel-Prozeß für oxidische Systeme analoges Verfahren polymere Vorläuferverbindungen für keramische Nitride und Carbonitride herzustellen, noch wenig untersucht.

Gemäß Can.J.Chem **41**(1963)134 gelangt man durch Umsetzung von Ti(NR₂)₄ mit primären Aminen zu polymeren Titanazanen. Aus J.Am.Ceram.Soc. **71**(1988)78 geht die Ammonolyse von Dialkylamiden des Titans, Niobs bzw. Zirkoniums und die Pyrolyse der erhaltenen polymeren Metallazane zu den entsprechenden binären Nitriden hervor. Synthesen polymerer Azane, die mehr als ein Übergangsmetall enthalten, sind bislang nicht bekannt geworden
Die Synthese polymerer multinärer Azane wurde bisher nur für das System Si-B-N beschrieben:

Gemäß den EP-A-389 084 und EP-A-0 424 082 werden lösliche Polyborosilazane durch Umsetzung von Polysilazanen bzw. Polyorganosilanen mit bororganischen Verbindungen erhalten. Die DE-A 4107108 offenbart die Herstellung von Oligo- oder Polyborosilazanen durch Polymerisation heterometallischer Monomere mit Ammoniak bzw. Alkylaminen. Diese Methoden erlauben es jedoch nicht, die Stöchiometrie der Produkte beliebig zu variieren; die Synthese der envähnten heterometallischen Monomere ist zudem mit erheblichem Aufwand verbunden.

Aufgabe der Erfindung ist die Bereitstellung neuartiger, einfach und in hohen Ausbeuten darstellbarer polymerer multinärer Azane mit einstellbarer Stöchiometrie, die eine homogene Elementverteilung aufweisen, sowie eines Verfahrens zur Herstellung von multinären nitridischen und carbonitridischen Keramiken aus diesen Polymeren.

Die Anforderungen werden durch folgende Polymere erfüllt, die Gegenstand dieser Erfindung sind. Es handelt sich dabei um polymere multinäre Azane, welche aus Baueinheiten der allgemeinen Formel [E(NR¹R²)ₐ(NR³)_{b/2}] aufgebaut sind, worin E=B, Al, Ga, In, Si, Ge, Ti, Zr, Hf, V, Nb, Ta, Cr, Mo, W und R¹, R², R³=H, C₁-C₆-Alkyl, Vinyl, Phenyl sein können, dadurch gekennzeichnet, daß mindestens zwei der genannten Elemente E enthalten sind, mit Ausnahme der Kombinationen Si-B und Si-Al, und jedes Atom E von drei bis sechs Stickstoffatomen koordiniert ist, wobei 0≤a≤6, 1≤b≤6, 3≤(a+b)≤6 und a und b ganze Zahlen bedeuten.

In einer bevorzugten Ausführungsform sind die erfindungsgemäßen polymeren multinären Azane dadurch gekennzeichnet, daß die Elemente E in homogener Verteilung vorliegen. In einer besonders bevorzugten Ausführungsform ist die Elementverteilung bis mindestens zu einer Auflösung von 0.5µm gleichförmig.

In einer bevorzugten Ausführungsform zeichnen sich die erfindungsgemäßen polymeren multinären Azane einen durch einen niedrigen Chloridgehalt aus. Er beträgt bevorzugt <100 ppm, in einer besonders bevorzugten Ausführungsform <20 ppm. Der Chloridgehalt der Polymeren wird mitbestimmt durch den Chloridgehalt der zur Herstellung verwendeten Elementamide. Hohe Chloridgehalte in den Polymeren wirken sich für die weitere Verarbeitung negativ aus. Insbesondere tritt bei der Pyrolyse der Polymeren verstärkt Korrosion auf. Im keramischen Material verursachen hohe Chloridgehalte schlechtere Sintereigenschaften und eine verringerte Enddichte.

Gegenstand dieser Erfindung sind weiterhin Verfahren zur Herstellung der erfindungsgemäßen polymeren multinären Azane.

Zur Herstellung der erfindungsgemäßen polymeren multinären Azane können Mischungen von Elementamiden der Zusammensetzung E(NR¹R²)ₙ, wobei 3≦n≦6, E=B, Al, Ga, In, Si, Ge, Ti, Zr, Hf, V, Nb, Ta, Cr, Mo, W und R¹=H, C₁-C₆-Alkyl, Vinyl, Phenyl, R²=C₁-C₆-Alkyl, Vinyl, Phenyl bedeuten können, in Substanz oder in einem aprotischen organischen Lösungsmittel mit Ammoniak oder primären Aminen polymerisiert werden.

In einer bevorzugten Ausführungsform wird die Reaktion bei Temperaturen zwischen -80°C und 200°C entweder in Substanz oder in einem aprotischen organischen Lösungsmittel, das ein C₅-C₈-Alkan, ein acyclischer oder cyclischer Ether oder ein Alkylaromat sein kann, durchgeführt, wobei die Konzentration der Amide >0.01m ist.

Die Anzahl und das Mischungsverhältnis der eingesetzten Amide kann beliebig gewählt werden, so daß im Produkt jede gewünschte Stöchiometrie bezüglich der Elemente E eingestellt werden kann.

Über die Variation der Reste R¹ und R² und die Auswahl eines Lösungsmittels mit entsprechenden Donoreigenschaften kann die Reaktivität der Edukte gezielt verändert werden. Es lassen sich die Ammonolysegeschwindigkeiten der Amide angleichen und dadurch eine homogene Verteilung der Elemente E im Polymeren erreichen. Des weiteren läßt sich die Polymerisationsgeschwindigkeit steuern, was die Kontrolle der Prozeßbedingungen bei der Herstellung erleichtert. Zudem lassen sich die Eigenschaften der erfindungsgemäßen Polymere im Hinblick auf die Weiterverarbeitung optimieren. In einer bevorzugten Ausführungsform sind R¹ und R² C₁-C₄-Alkane.

Die Viskosität der Lösungen läßt sich über die Konzentration des Polymeren in Lösung in weiten Bereichen variieren und erlaubt eine Optimierung der für die weitere Verarbeitung benötigten Eigenschaften.

Über die Reaktionstemperatur bei der Polymerisation ist eine Steuerung des Vernetzungsgrads und der Molmassen der erfindungsgemäßen Polymere möglich. Bei niedrigen Temperaturen können viskose Öle erhalten werden, bei höheren Temperaturen entstehen Feststoffe.

Zur Herstellung von Pulvern wird das Lösungsmittel bevorzugt unter vermindertem Druck entfernt. Geeignet sind auch andere gebräuchliche Trockenverfahren.

Gegenstand der Erfindung ist auch die Verwendung der erfindungsgemäßen polymeren multinären Azane zur Herstellung von multinären Nitriden oder Carbonitriden durch Pyrolyse in Edelgas, N₂, NH₃ oder primäre Amine enthaltender Atmosphäre bei Temperaturen von 400 bis 2000°C.

In einer bevorzugten Ausführungsform werden die Polymere zur Synthese von rein nitridischem Material bei Temperaturen von 400-1000°C im NH₃-Strom pyrolysiert und anschließend zur Entfernung des restlichen Wasserstoffs bei Temperaturen zwischen 1400-2000°C in N₂ oder Argonatmosphäre calciniert. Zur Synthese von carbonitridischem Material führt man beide Schritte unter N₂ oder Ar durch.

Ebenfalls Gegenstand der Erfindung ist die Verwendung der erfindungsgemäßen polymeren multinären Azane zur Herstellung von keramischen Formkörpern, Folien Fasern oder Beschichtungen durch Pyrolyse in Edelgas, N₂, NH₃ oder primäre Amin enthaltender Atmosphäre bei Temperaturen von 400 bis 2000°C.

Die Wahl des Polymerisationsagens ermöglicht eine Steuerung der Eigenschaften der erfindungsgemäßen Polymere. Bei Polymerisation mit Ammoniak entstehen unlösliche Duromere, Polymerisation mit primären Aminen führt zu in den gebräuchlichen organischen Lösungsmitteln löslichen Thermoplasten, die direkt in Lösung oder als Schmelze verschiedenen Formgebungsprozessen unterzogen werden können, z.B. Formgießen, Verspinnen zu Fasern, Ziehen von Folien, Herstellung von Beschichtungen durch verschiedene Beschichtungsverfahren wie Tauch- (Dip-Coating) oder Fliehkraftbeschichtung (Spin-Coating).

Im folgenden ist die Erfindung beispielhaft erläutert, ohne daß hierin eine Einschränkung zu sehen ist.

### Beispiel 1:

### Darstellung eines Polytitanosilazans mit einem Si/Ti-Verhältnis von 1:1

### Reaktionsgleichung:

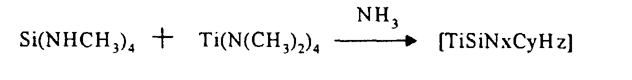

### Versuchsdurchführung:

Einer Lösung von 8.88 g (0.06 mol) Si(NHCH₃)₄ und 13.56 g (0.06 mol) Ti(N(CH₃)₂)₄ in 500 ml Pentan wurden bei -78°C unter Rühren 50 ml NH₃ zugegeben. Man ließ die Reaktionsmischung während 12 h auf Raumtemperatur erwärmen. Das Lösungsmittel wurde unter vermindertem Druck abdestilliert. Es wurden 12.4 g gelbes Polytitanosilazan erhalten. Analytische Daten des Polymeren:
Infrarotspektroskopie [cm⁻¹]: 3340 (m); 2920, 2810 (s); 2100 (w); 1550 (w), 1380 (m); 1100 (s); 920 (ss); 550 (m,vb). Pulverdiffraktometrie: amorph. Energiedisperse Röntgenanalyse: Homogenes Polymer, Verhältnis Si:Ti = 1:1.

5 g des Polymeren wurden 12 h lang bei 1000°C im Ammoniakstrom pyrolysiert. Es wurden 3.1 g eines schwarzglänzenden amorphen Pulvers erhalten, entsprechend einer keramischen Ausbeute von 62 %. Analytische Daten des Pyrolyseprodukts:
Infrarotspektroskopie [cm⁻¹]: 3400 (w); 950 (s,b); 470(m,b). Pulverdiffraktometrie: amorph. Energiedisperse Röntgenanalyse: Homogene Elementverteilung mindestens bis zur Auflösungsgrenze von 0.5 µm, Verhältnis Si:Ti = 1:1

### Beispiel 2:

### Darstellung eines Polytitanosilazans mit einem Si/Ti-Verhältnis von 2:1

### Reaktionsgleichung:

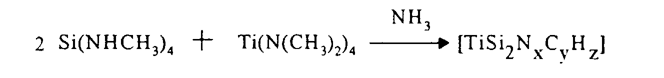

### Versuchsdurchführung:

Einer Lösung von 6 g (0.04 mol) Si(NHCH₃)₄ und 4.5g (0.02 mol) Ti(N(CH₃)₂)₄ in 300 ml Tetrahydrofuran wurden bei -78°C unter Rühren 30 ml NH₃ zugegeben. Man ließ die Reaktionsmischung während 12 h auf Raumtemperatur erwärmen. Das Lösungsmittel wurde unter vermindertem Druck abdestilliert. Es wurden 7.1 g gelbes Polytitanosilazan erhalten. Analytische Daten des Polymeren:
Infrarotspektroskopie [cm⁻¹]: 3400 (s); 2920, 2890 (m); 1620 (w); 1460, 1385 (m); 1185 (m); 1040 (ss); 450 (m). Pulverdiffraktometrie: amorph. Energiedisperse Röntgenanalyse: Homogenes Polymer, Verhältnis Si:Ti = 2:1.

5 g des Polymeren wurden 12 h lang bei 1000°C im Ammoniakstrom pyrolysiert. Es wurden 2.75 g eines schwarzglänzenden amorphen Pulvers erhalten, entsprechend einer keramischen Ausbeute von 55 %. Analytische Daten des Pyrolyseprodukts:
Infrarotspektroskopie [cm⁻¹]: 3400 (w); 950 (ss); 460(m,b). Pulverdiffraktometrie: amorph. Energiedisperse Röntgenanalyse: Homogene Elementverteilung mindestens bis zur Auflösungsgrenze von 0.5 µm, Verhältnis Si:Ti = 2:1

### Beispiel 3:

### Darstellung eines Polyzirkonosilazans mit einem Si/Zr-Verhältnis von 1:1

### Reaktionsgleichung:

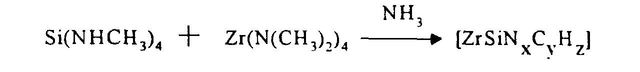

### Versuchsdurchführung:

Einer Lösung von 7.4 g (0.05 mol) Si(NHCH₃)₄ in 400 ml Pentan wurden bei -78°C unter Rühren 50 ml NH₃ zugegeben. Nach 5 min wurden 12.8 g (0.05 mol) Zr(N(CH₃)₂)₄ in 100 ml Pentan zugegeben. Die Reaktionsmischung ließ man während 12 h auf Raumtemperatur erwärmen und weitere 4 h lang rühren. Das Lösungsmittel wurde unter vermindertem Druck abdestilliert. Es wurden 11.4g gelbes Polyzirkonosilazan erhalten. Analytische Daten des Polymeren:
Infrarotspektroskopie [cm⁻¹]: 3350 (s); 2890, 2800 (s); 1470 (w), 1370 (m); 1260 (m); 1100 (ss); 800 (s); 520 (m); 470 (m).
Pulverdiffraktometrie: amorph. Energiedisperse Röntgenanalyse: Homogenes Polymer, Verhältnis Si:Zr = 1:1.

5 g des Polymeren wurden 12 h lang bei 1000°C im Ammoniakstrom pyrolysiert. Es wurden 2.9 g eines schwarzglänzenden amorphen Pulvers erhalten, entsprechend einer keramischen Ausbeute von 58 %. Analytische Daten des Pyrolyseprodukts:
Infrarotspektroskopie [cm⁻¹]: 3400 (w); 950 (s); 530(m). Pulverdiffraktometrie: amorph.
Energiedisperse Röntgenanalyse: Homogene Elementverteilung mindestens bis zur Auflösungsgrenze von 0.5 µm, Verhältnis Si:Zr = 1:1

### Beispiel 4:

### Darstellung eines Polyborosilazans mit einem Si/B-Verhältnis von 2:1

### Reaktionsgleichung:

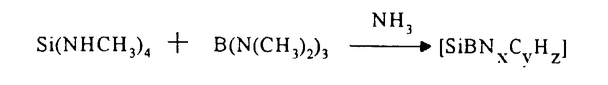

### Versuchsdurchführung:

Einer Lösung von 10 g (0.067 mol) Si(NHCH₃)₄ in 400 ml Pentan wurden bei-78°C unter Rühren 50 ml NH₃ zugegeben. Innerhalb von 5 min wurde eine Lösung von 4.83 g (0.0335 mol) B(N(CH₃)₂)₃ in 100 ml Pentan zugetropft. Die Reaktionsmischung ließ man während 12 h auf Raumtemperatur erwärmen und weitere 4 h lang rühren. Das Lösungsmittel wurde unter vermindertem Druck abdestilliert. Es wurden 10.3 g weißes Polyborosilazan erhalten. Analytische Daten des Polymeren: Infrarotspektroskopie [cm⁻¹]: 3440 (s); 2890, 2810 (s); 1600 (w); 1460(m); 1360 (m); 1210 (m); 1090, 940 (ss); 800, 470 (m). Pulverdiffraktometrie: amorph.

5 g des Polymeren wurden 12 h lang bei 1000°C im Ammoniakstrom pyrolysiert. Es wurden 2.8 g eines weißen amorphen Pulvers erhalten, entsprechend einer keramischen Ausbeute von 56 %. Analytische Daten des Pyrolyseprodukts Infrarotspektroskopie [cm⁻¹]: 3400 (w); 1350 (s); 1040 (ss); 460(m). Pulverdiffraktometrie: amorph.

### Beispiel 5:

### Darstellung eines Polyalumozirkonazans

### Reaktionsgleichung:

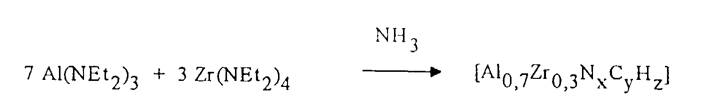

### Versuchsdurchführung:

In eine Lösung von 2.13 g (5.6 mmol) Zr(NEt₂)₄ und 3.19 g (13.1 mmol) Al(NEt₂)₃ in 100 ml n-Hexan wurde bei Raumtemperatur NH₃ eingeleitet. Es bildete sich ein fahlgelber Niederschlag, der abfiltriert und unter vermindertem Druck von anhaftendem Lösungsmittel befreit wurde. Es wurden 1.55 g fahlgelbes Polyalumozirkonazan erhalten. Analytische Daten des Polymeren:
Infrarotspektroskopie [cm⁻¹]: 3270 (m); 2960, 2920, 2855 (s); 1535 (m); 1460 (m), 1380 (w); 1260 (s); 1095, 1020 (s); 800 (ss); , 600 (s,b). Pulverdiffraktometrie: amorph.

1.5 g des Polymeren wurden 72 h lang bei 990°C im Ammoniakstrom pyrolysiert. Es wurden 0.8 g eines weißen amorphen Pulvers erhalten, entsprechend einer keramischen Ausbeute von 53%. Analytische Daten des Pyrolyseprodukts:
Infrarotspektroskopie [cm⁻¹]: 3430 (m); 1635 (m); 1390 (w); 1150 (w); 710 (s,b).
Pulverdiffraktometrie: amorph. Energiedisperse Röntgenanalyse: Homogene Elementverteilung mindestens bis zur Auflösungsgrenze von 0.5 µm, Verhältnis Al:Zr ≈ 2:1.

### Beispiel 6:

### Darstellung eines Polyalumotitanozirkonazans

### Reaktionsgleichung:

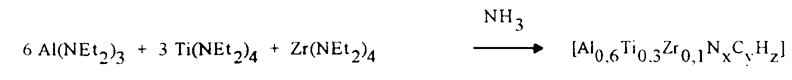

### Versuchsdurchführung:

In eine Lösung von 2.92 g (12 mmol) Al(NEt₂)₃, 2.02 g (6 mmol) Ti(NEt₂)₄ und 0.76 g (2 mmol) Zr(NEt₂)₄ in 100ml n-Heptan wurde bei Raumtemperatur NH₃ eingeleitet. Es bildete sich ein braunroter Niederschlag, der abfiltriert und unter vermindertem Druck von anhaftendem Lösungsmittel befreit wurde. Es wurden 2.15 g braunrotes Polyalumotitanozirkonazan erhalten. Analytische Daten des Polymeren:
Infrarotspektroskopie [cm⁻¹]: 3290 (m); 2960, 2920, 2855 (s); 2000 (w),1550 (s,sh); 1465 (w), 1380 (w); 1260 (s); 1090, 1020 (s); 800 (s); 600 (s,vb). Pulverdiffraktometrie: amorph.

2.1 g des Polymeren wurden 72 h lang bei 995°C im Ammoniakstrom pyrolysiert. Es wurden 1.4 g eines schwarzen amorphen Pulvers erhalten, entsprechend einer keramischen Ausbeute von 66 %. Analytische Daten des Pyrolyseprodukts:
Infrarotspektroskopie [cm⁻¹]: 3435 (s); 1635 (m); 1400, 1385 (w); 740 (ss,sh).
Pulverdiffraktometrie: amorph. Energiedisperse Röntgenanalyse: Homogene Elementverteilung mindestens bis zur Auflösungsgrenze von 0.5 µm.

### Beispiel 7:

### Darstellung eines Polytitanovanadozirkonazans

### Reaktionsgleichung:

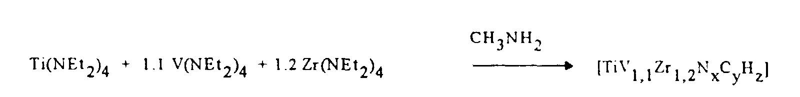

### Versuchsdurchführung:

In eine Lösung von 3.37 g (10 mmol) Ti(NEt₂)₄, 3.70 g (11 mmol) V(NEt₂)₄ und 4.60 g (12 mmol) Zr(NEt₂)₄ in 100 ml Tetrahydrofuran wurde bei Raumtemperatur Methylamin eingeleitet. Es bildete sich ein schwarzgrüner Niederschlag, der abfiltriert und unter vermindertem Druck von anhaftendem Lösungsmittel befreit wurde. Es wurden 3.71 g schwarzgrünes Polytitanovanadozirkonazan erhalten. Analytische Daten des Polymeren: Infrarotspektroskopie [cm⁻¹]: 3255 (m); 2960 (s), 2855 (ss,sh), 2760 (s); 2100 (w), 1660 (w), 1575 (m), 1050, 1465, 1400, 1365 (m); 1260 (s); 1095, 1025 (s); 800 (s); , 600 (s,vb). Pulverdiffraktometrie: amorph.

### Beispiel 8:

### Darstellung eines Polytitanoborazans

### Reaktionsgleichung:

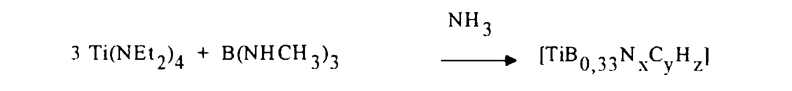

### Versuchsdurchführung:

In eine Lösung von 9.7 g (29 mmol) Ti(NEt₂)₄ und 1.2 g (12mmol) B(NHCH₃)₃ in 100 ml Heptan wurde bei 90°C NH₃ eingeleitet. Es bildete sich ein schwarzer Niederschlag, der abfiltriert und unter vermindertem Druck von anhaftendem Lösungsmittel befreit wurde. Es wurden 3.53 g schwarzes Polytitanoborazan erhalten. Analytische Daten des Polymeren: Infrarotspektroskopie [cm⁻¹]: 3290 (m); 2960, 2920, 2855 (s); 1640 (m); 1380 (w); 1100 (s,b); 600 (m,b). Pulverdiffraktometrie: amorph.

3.5 g des Polymeren wurden 16 h lang bei 1600°C im Stickstoffstrom pyrolysiert. Es wurden 1.75 g eines schwarzen Pulvers erhalten, entsprechend einer keramischen Ausbeute von 50 %. Analytische Daten des Pyrolyseprodukts: Infrarotspektroskopie [cm⁻¹]: 3435 (s); 1650 (m); 1385 (m); 1150 (m,sh); 800 (w); 660, 600 (w). Pulverdiffraktometrie: weitgehend amorph; einige schwache, sehr breite Peaks deuten auf eine kubische Elementarzelle mit a=4.26Å hin. Energiedisperse Röntgenanalyse: Keine Entmischung beobachtet, homogene Elementverteilung mindestens bis zur Auflösungsgrenze von 0.5 µm.

### Beispiel 9:

### Darstellung eines Polytitanoborazans

### Reaktionsgleichung:

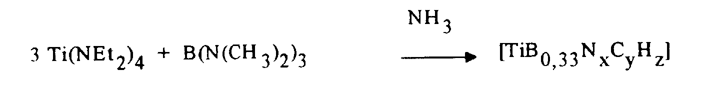

### Versuchsdurchführung:

Eine Mischung von 10.47 g (31 mmol) Ti(NEt₂)₄ und 1.25 g (9 mmol) B(N(CH₃)₂)₃ wurde unter Ammoniakatmosphäre auf 200°C erhitzt. Es bildeten sich 2.9 g braunschwarzes Polytitanoborazan. Analytische Daten des Polymeren: Infrarotspektroskopie [cm⁻¹]:
3290 (m); 2960, 2920, 2855 (s); 1640 (m); 1380 (w); 1100 (s,b); 600 (m,b). Pulverdiffraktometrie: amorph.

2.9 g des Polymeren wurden 12 h lang bei 1000°C im Ammoniakstrom pyrolysiert. Es wurden 2.0 g eines schwarzen Pulvers erhalten, entsprechend einer keramischen Ausbeute von 69 %. Analytische Daten des Pyrolyseprodukts: Infrarotspektroskopie [cm⁻¹]: 3440 (s); 1635 (m); 1400, 1385 (m); 1100 (m,sh); 795 (w); 660, 600 (w), 470 (w). Pulverdiffraktometrie: amorph. Energiedisperse Röntgenanalyse: Keine Entmischung beobachtet, homogene Elementverteilung mindestens bis zur Auflösungsgrenze von 0.5 µm.

### Beispiel 10:

### Darstellung eines Polytitanoborazans

### Reaktionsgleichung:

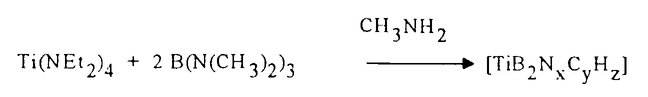

### Versuchsdurchführung:

Eine Mischung von 6.8 g (20 mmol) Ti(NEt₂)₄ und 5.8 g (40 mmol) B(N(CH₃)₂)₃ wurde unter Methylaminatmosphäre auf 200°C erhitzt. Es bildeten sich 3.40 g braunschwarzes Polytitanoborazan. Analytische Daten des Polymeren: Infrarotspektroskopie [cm⁻¹]:
3290 (m); 2960, 2920, 2855 (s); 1640 (m); 1380 (w); 1100 (s,b); 600 (m,b). Pulverdiffraktometrie: amorph
3.40 g des Polymeren wurden 72 h lang bei 800°C unter Argonatmosphäre pyrolysiert. Es wurden 1.85 g eines schwarzen Pulvers erhalten, entsprechend einer keramischen Ausbeute von 55 %. Analytische Daten des Pyrolyseprodukts: Infrarotspektroskopie [cm⁻¹]: 3425 (s); 1635 (m); 1400, 1385 (s); 1100 (s,sh); 790 (w); 660, 600 (w), 470 (w).
Pulverdiffraktometrie: amorph. Energiedisperse Röntgenanalyse: Keine Entmischung beobachtet, homogene Elementverteilung mindestens bis zur Auflösungsgrenze von 0.5 µm.

## Patentansprüche

1. Polymere multinäre Azane, welche aus Baueinheiten der allgemeinen Formel [E(NR¹R²)ₐ(NR³)_{b/2}] aufgebaut sind, worin E=B, Al, Ga, In, Si, Ge, Ti, Zr, Hf, V, Nb, Ta, Cr, Mo, oder W und R¹, R², R³=H, C₁-C₆-Alkyl, Vinyl, oder Phenyl sind, dadurch gekennzeichnet, daß mindestens zwei der genannten Elemente E enthalten sind, mit Ausnahme der Kombinationen Si-B, und Si-Al, und jedes Atom E von drei bis sechs Stickstoffatomen koordiniert ist, wobei 0≤a≤6, 1≤b≤6, 3≤(a+b)≤6 und a und b ganze Zahlen bedeuten.

2. Polymere multinäre Azane gemäß Anspruch 1, dadurch gekennzeichnet, daß die Elemente E in homogener Verteilung vorliegen.

3. Polymere multinäre Azane gemäß einem der Ansprüche 1 oder 2, dadurch gekennzeichnet, daß deren Chloridgehalt <100 ppm beträgt.

4. Polymere multinäre Azane gemäß Anspruch 3, dadurch gekennzeichnet, daß deren Chloridgehalt <20 ppm beträgt.

5. Verfahren zur Herstellung der polymeren multinären Azane gemäß einem oder mehreren der Ansprüche 1 bis 4, gekennzeichnet dadurch, daß Mischungen von Elementamiden der Zusammensetzung E(NR¹R²)ₙ, wobei 3≤n≤6, E=B, Al, Ga, In, Si, Ge, Ti, Zr, Hf, V, Nb, Ta, Cr,Mo, oder W und R¹=H, C₁-C₆-Alkyl, Vinyl, Phenyl, R²=C₁-C₆-Alkyl, Vinyl, oder Phenyl bedeuten in Substanz oder in einem aprotischen organischen Lösungsmittel mit Ammoniak oder primären Aminen polymerisiert werden.

6. Verfahren zur Herstellung der polymeren multinären Azane gemäß Anspruch 5, gekennzeichnet dadurch, daß die Polymerisation bei Temperaturen zwischen -80°C und 200°C entweder in Substanz oder in einem aprotischen organischen Lösungsmittel, das ein C₅-C₈-Alkan, ein acyclischer oder cyclischer Ether oder ein Alkylaromat ist, durchgeführt wird, wobei die Konzentration der Amide >0.01m ist

7. Verwendung der polymeren multinären Azane gemäß einem oder mehreren der Ansprüche 1 bis 6 zur Herstellung von multinären Nitriden oder Carbonitriden durch Pyrolyse in Edelgas, N₂, NH₃ oder primäre Amine enthaltender Atmosphäre bei Temperaturen von 400 bis 2000°C.

8. Verwendung der polymeren multinären Azane gemäß einem oder mehreren der Ansprüche 1 bis 6 zur Herstellung von keramischen Formkörpern, Folien, Fasern oder Beschichtungen durch Pyrolyse in Edelgas, N₂, NH₃ oder primäre Amin enthaltender Atmosphäre bei Temperaturen von 400 bis 2000°C.

## Claims

1. Polymeric multinary azanes which are built up of structural units of the general formula [E(NR¹R²)ₐ(NR³)_{b/2}], where E=B, Al, Ga, In, Si, Ge, Ti, Zr, Hf, V, Nb, Ta, Cr, Mo or W and R¹, R², R³=H, C₁-C₆-alkyl, vinyl or phenyl, characterized in that at least two of the said elements E are present, with the exception of the combinations Si-B and Si-Al and each atom E is coordinated by from 3 to 6 nitrogen atoms, where 0≤a≤6, 1≤b≤6, 3≤(a+b)≤6 and a and b are integers.

2. Polymeric multinary azanes according to Claim 1, characterized in that the elements E are distributed homogeneously.

3. Polymeric multinary azanes according to Claim 1 or 2, characterized in that their chloride content is <100 ppm.

4. Polymeric multinary azanes according to Claim 3, characterized in that their chloride content is <20 ppm.

5. Process for preparing the polymeric multinary azanes according to one or more of Claims 1 to 4, characterized in that mixtures of element amides of the composition E(NR¹R²)ₙ, where 3≤n≤6, E=B, Al, Ga, In, Si, Ge, Ti, Zr, Hf, V, Nb, Ta, Cr, Mo or W and R¹=H, C₁-C₆-alkyl, vinyl, phenyl, R²=C₁-C₆-alkyl, vinyl or phenyl, are polymerized in bulk or in an aprotic organic solvent with ammonia or primary amines.

6. Process for preparing the polymeric multinary azanes according to Claim 5, characterized in that the polymerization is carried out at temperatures between -80°C and 200°C, either in bulk or in an aprotic organic solvent which is a C₅-C₈-alkane, an acyclic or cyclic ether or an alkylaromatic, where the concentration of the amides being >0.01 M.

7. Use of the polymeric multinary azanes according to one or more of Claims 1 to 6 for preparing multinary nitrides or carbonitrides by pyrolysis at temperatures of from 400 to 2000°C in an atmosphere containing noble gas, N₂, NH₃ or primary amines.

8. Use of the polymeric multinary azanes according to one or more of Claims 1 to 6 for producing ceramic shaped bodies, films, fibres or coatings by pyrolysis at temperatures of from 400 to 2000°C in an atmosphere containing noble gas, N₂, NH₃ or primary amine.

## Revendications

1. Azanes polymères à éléments multiples, constitués de motifs de structure de formule générale [E(NR¹R²)ₐ(NR³)_{b/2}] dans laquelle E=B, Al, Ga, In, Si, Ge, Ti, Zr, Hf, V, Nb, Ta, Cr, Mo ou W et R¹, R², R³=H, alkyle en C₁-C₆, vinyle ou phényle, caractérisés en ce qu'ils contiennent au moins deux des éléments E mentionnés, à l'exception des combinaisons Si-B et Si-Al, chaque atome E étant coordonné avec trois à six atomes d'azote, et a et b sont des nombres entiers qui satisfont aux relations 0≤a≤6, 1≤b≤6, 3≤(a+b)≤6.

2. Azanes polymères à éléments multiples selon la revendication 1, caractérisés en ce que les éléments E sont en répartition homogène.

3. Azanes polymères à éléments multiples selon une des revendications 1 ou 2, caractérisés en ce que leur teneur en chlorure est inférieure à 100 ppm.

4. Azanes polymères à éléments multiples selon la revendication 3, caractérisés en ce que leur teneur en chlorure est inférieure à 20 ppm.

5. Procédé de préparation des azanes polymères à éléments multiples selon une ou plusieurs des revendications 1 à 4, caractérisé en ce que l'on polymérise avec l'ammoniac ou des amines primaires, en masse ou dans un solvant organique aprotonique, des mélanges des amidures élémentaires de composition E(NR¹R²)ₙ dans laquelle 3≤n≤6, E=B, Al, Ga, In, Si, Ge, Ti, Zr, Hf, V, Nb, Ta, Cr, Mo ou W et R¹=H, alkyle en C₁-C₆, vinyle, phényle, R²=alkyle en C₁-C₆, vinyle ou phényle.

6. Procédé de préparation des azanes polymères à éléments multiples selon la revendication 5, caractérisé en ce que la polymérisation est réalisée à des températures allant de -80 à +200°C, soit en masse, soit dans un solvant organique aprotonique consistant en un alcane en C₅-C₈, un éther cyclique ou acyclique ou un hydrocarbure alkylaromatique, avec une concentration des amidures supérieure à 0,01 M.

7. Utilisation des azanes polymères à éléments multiples selon une ou plusieurs des revendications 1 à 6 pour la préparation de nitrures ou carbonitrures à éléments multiples par pyrolyse dans une atmosphère contenant des gaz rares, de l'azote, de l'ammoniac ou des amines primaires à des températures de 400 à 2 000°C.

8. Utilisation des azanes polymères à éléments multiples selon une ou plusieurs des revendications 1 à 6 pour la fabrication d'objets moulés, feuilles, fibres ou l'application de revêtements céramiques par pyrolyse en atmosphère contenant des gaz rares, de l'azote, de l'ammoniac ou une amine primaire à des températures de 400 à 2 000°C.
